# EUROPEAN PATENT SPECIFICATION

(11) **EP 4 197 885 B1**
(45) Date of publication and mention of the grant of the patent: **31.12.2025**
(21) Application number: 21214597.3
(22) Date of filing: 15.12.2021
(51) Int. Cl.: B62D 5/00, B62D 1/12, B62D 5/09

(54) **HYDRAULIC STEERING SYSTEM**
HYDRAULISCHES LENKSYSTEM
SYSTÈME DE DIRECTION HYDRAULIQUE

(43) Date of publication of application: 21.06.2023
(73) Proprietor: Danfoss Power Solutions, Inc., Ames, IA 50010 (US)
(72) Inventor: Sveinsson, Jon Geir, 6430 Nordborg (DK); Koch Kryhlmann, Anders, 50010 Ames, Iowa (US)
(74) Representative: Keil & Schaafhausen Patentanwälte PartGmbB

(56) References cited:
- EP-A1- 1 992 548
- EP-A1- 3 763 602
- EP-A2- 1 316 491
- US-A1- 2012 125 141
- US-A1- 2012 217 083

## Description

The present invention relates to a hydraulic steering system according to the preamble of claim 1.

Such a steering system is known from US 2012/0217083 A1 showing a steering control system having speed-based centering. The hydraulic steering system comprises a steering motor and a joystick having a housing, a handle mounted moveably to the housing, a handle angle sensor and return-to-center means producing a restoring force on the handle, wherein the return-to-center means produce a variable restoring force depending on an angle of the handle or on the vehicle speed. The joystick can be operated in a mode, in which the operator operates the joystick to determine the direction into which the vehicle is steered. The return-to-center means produce a restoring force on the handle in a direction towards a neutral position of the handle.

Such a hydraulic steering system is a steer by wire system, in which there is no mechanic connection between the joystick and the steering motor. The steering motor is controlled by the joystick. When the operator, for example, tilts the handle to the right hand side, the vehicle equipped with such a steering system is steered to the right. When the operator tilts the handle to the left hand side, the vehicle is steered to the left.

Usually, such a joystick comprises return to center means in form of a spring arrangement. The spring arrangement produces a force on the handle which moves the handle in the neutral position when there are no other forces present, for example a force produced by the hand of the operator holding the joy stick. The force of this spring arrangement has to be overcome when the operator moves the handle, for example tilts the handle.

The movement of the joystick not only determines the direction into which the vehicle is steered but also the steering speed. When the handle is tilted to a maximum angle, the change of the direction of the steered wheels is the maximum allowable speed.

EP 1 992 548 A1 shows a further steering system for a vehicle, in which a pair of joysticks is used to change the running direction of the vehicle. The joysticks are connected to respective return-force applying devices which are controlled by a controller depending on the operation angles of the respective joysticks and/or depending on the vehicle speed. The joysticks can be operated in a first mode, in which the operator operates the joystick to determine the direction into which the vehicle is steered, and the return-to-center means produce a restoring force on the handle in a direction towards a neutral position of the handle.

EP 1 316 491 A2 discloses the preamble of the independent claim and shows a device and a method for operating a vehicle. The device comprises a joystick to which a return force and a reaction force are applied, wherein these forces can be controlled separately. Reaction force generating means are provided for generating a reaction force against the joystick and this reaction force is controlled so as to become smaller the closer the joystick is to the neutral position and larger the farther away the joystick is from the neutral position.

EP 3 763 602 A1 shows another work vehicle having a joystick which is connected to a spring member functioning as return-to-center means. In a second embodiment a joystick is connected to a counterforce applying mechanism that applies a counterforce to the operation of the joystick lever. In both cases the counterforce increases as the absolute value of the tilting angle of the joystick increases.

The object underlying the invention is to help the operator to steer a vehicle in a safe manner.

This object is solved with a hydraulic steering system as described in claim 1.

The restoring force which moves the handle into the neutral position and which has to be overcome by the operator when he steers the vehicle is thus not constant, but variable and depends on the angle of the joystick and/or of a parameter of the vehicle. In other words, the restoring force can be increased by the return to center means in some situations, so that the operator has to act against a larger force to move the handle of the joystick. This can be used, for example, to avoid a too fast movement of the joystick.

The first mode is a "in use mode", wherein the operator operates the joystick to determine the direction into which the vehicle is steered. The second mode is "not in use mode", wherein the operator is not holding the joystick. In this case the vehicle can be steered by a GPS-System, for example. In the last case the handle can be used to indicate the steering condition of the steering motor. When the handle is in a neutral position, it is indicated that the steering motor has adjusted the steered wheels into a straight forward direction. When the handle is tilted or brought into another position, the operator can see that the steered wheels are directed to another direction. This is in particular of advantage when the operator takes over control from the GPS-System to a manual steering. The switching between the two modes of operation can be made by a switch or by a sensor which detects the presence of a hand of an operator at the handle of the joystick. The indication of the direction is in particular useful when the vehicle has stopped and there is no further information about the steering direction of the steering motor.

In an embodiment of the invention the signal at the input indicates a speed of the vehicle. When the speed increases, the restoring force can be increased as well.

This is a safety means, since at a higher speed of the vehicle a fast steering movement can be dangerous, for example in a combined harvester. However, in a low speed operation, a fast steering can be desired.

In an embodiment of the invention the return to center means comprise a controller and a motor acting on the handle of the joystick. The motor produces the restoring force. The controller controls the operation of the motor.

In an embodiment of the invention the motor is an electric motor, preferably a stepper motor. An electric motor, in particular a stepper motor, has the advantage that it can produce a force even if it is not moved. A stepper motor requires only a small space and can produce the necessary forces.

In an embodiment of the invention the handle angle sensor is a Hall sensor. The handle angle sensor is used to determine the angle of the handle of the joystick in relation to a base of the joystick. The signal of the angle sensor can be used to derive the speed with which the handle is moved in relation to the base.

In an embodiment of the invention the return to center means are free of a spring. In other words, the only thing that applies the restoring force to the handle of the joystick is the motor.

In embodiment of the invention in the second mode the position of the handle corresponding to the steering angle of the motor is considered as neutral position. When the operator takes the handle in the tilted position and moves it towards the neutral position, the same safety means can be applied, i.e. the restoring force can be varied depending on the speed with which the handle is moved or on another parameter of the vehicle, for example the speed.

In embodiment of the invention the handle has a moving range of ± 30°. This is a rather large moving range allowing for a very precise steering of the vehicle.

In embodiment of the invention the restoring force is updated at least 500 times per second, in particular at least 800 times per second, and preferably at least 1000 times per second. Such a rather high frequency has the advantage that the operator does not sense a vibration of the handle. Furthermore, this frequency is high enough to take into account even the short time in which the handle is moved from the neutral position to one of the extreme positions to the left or to the right. This means that the restoring force can be sufficiently increased during such a movement.

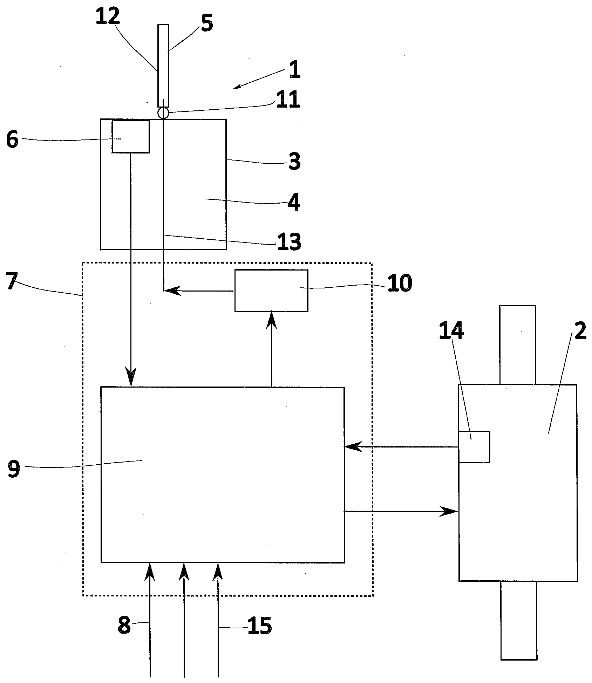

An embodiment of the invention will now be described with reference to the drawing, in which:
The only figure shows a schematic illustration of a fully hydraulic steering system.

A fully hydraulic steering system 1 comprises a steering motor 2 and a joystick 3 having a housing 4, a handle 5, a handle angle sensor 6 and return to center means 7 comprising an input 8 for a parameter of a vehicle to be steered.

The return to center means 7 comprise a controller 9 and a motor 10 acting on the handle 5 of the joystick 3. In this illustration the return to center means 7 are shown outside the housing 4. However, the return to center means 7 are usually mounted inside the housing 4.

The steering motor 2 is a hydraulic motor. Means for supplying hydraulic fluid to the steering motor 2 are not shown separately. Such means are controlled by the controller 9.

The handle 5 is mounted to the housing 4 by means of a pivot bearing 11, so that the handle 5 can be tilted in relation to the housing 4. In the present case, the tilting angle is in a range of ± 30°.

The handle 5 comprises a grip area 12 on one side of the handle 5 and an extension 13 on the opposite site of the pivot bearing 11. The motor 10 acts on the extension 13.

The motor 10 is an electric motor, in particular in form of a stepper motor. The electric motor 10 is a rotational motor and can directly be connected to the extension or by means of a suitable gearing. When the motor is operated, the handle 5 is moved back to its neutral position (tilting angle for example 0°). However, even if the motor 10 is not rotated, it can produce a force on the extension 13 and in consequence on the handle 5. This force has to be overcome by an operator operating the handle 5 of the joystick 3.

The handle angle sensor 6 detects the actual position of the handle 5 in relation to the housing 4 and produces a position signal. This position signal can also be used to derive the speed with which the handle 5 is moved. The position signal of the handle angle sensor 6 is transmitted to the controller 9. The controller 9 uses this signal for two purposes. The first purpose is to operate the steering motor 2. The second purpose can be to derive the speed signal from the position signal of the handle sensor 6 and to operate the motor 10 in a way that the motor 10 produces a restoring force which depends on the moving speed of the handle 5. The larger the moving speed of the handle 5 the higher is the restoring force. This is a safety means preventing an operator to move the handle 5 too fast which could produce a dangerous situation.

The steering motor 2 comprises a wheel angle sensor 14 which is connected to the controller 9 of the return to center means 7, so that a closed loop can be realised for steering the vehicle by controlling the steering motor 2 in an appropriate manner.

The input 8 receives a signal indicative of a parameter of the steered vehicle. This signal can in particular represent a speed of the vehicle. The higher the speed of the vehicle, the larger is the restoring force produced by the motor 10 of the return to center means 7. Thus, when the vehicle moves at a higher speed, the operator needs more force to tilt the handle 5 of the joystick 3.

The way of operation described so far is a first mode of operation which can also be termed "in use mode". In this mode the handle 5 is operated by an operator.

The hydraulic system 1 can be operated also in a second mode, which is called "not in use mode". In this second mode the handle 5 of the joystick 3 is not held by an operator. In this case, the controller 9 can receive a GPS-Signal via another input 15 and control the steering motor 2 in a corresponding manner.

Furthermore, when the controller 9 of the return to center means 7 receive the respective GPS-Signal, the controller 9 operates the motor 10 to move the handle 5 of the joystick 3 into a position which corresponds to a steering angle of the steering motor 2. This steering angle is detected by the wheel angle sensor 14. Thus, when the steering motor 2 has moved the steered wheels out of a neutral position, this is indicate by the tilting angle of the handle 5 of the joystick 3. The farther the steering motor 2 has moved out of the steering position, the more the handle 5 is tilted.

When in this case the handle 5 is tilted, the tilted position is considered as neutral position. When the operator takes over control of the handle 5, it is possible that he moves the handle 5 in direction towards the neutral position. This movement is then controlled by the return to center means 7 in the same way as described above. The restoring force produced by the motor 10 and acting against this movement can be depended on a speed of a movement of the handle 5 and/or of another parameter of the vehicle, for example the vehicle speed.

The movement of the handle 5 from the neutral position to the extreme position i.e. by ± 30°, can be performed with an fraction of a second, for example a quarter of a second. Thus, the restoring force is updated at least 500 times per second preferably at least 800 times per second and in particular at least 1000 times per second. That means that the controller 9 and the motor 10 react very fast to a movement of the handle 5 and adapt the restoring 4 very fast to the operation condition of the handle 5.

## Claims

1. Hydraulic steering system (1) comprising a steering motor (2) and a joystick (3) having a housing (4), a handle (5) mounted movably to the housing (4), a handle angle sensor (6) and return to center means (7) producing a restoring force on the handle (5), wherein the return to center means (7) produces a variable restoring force depending on an angle of the handle (5) and/or on a signal at an input (8) of the return to center means (7) for a parameter of a vehicle to be steered and the joystick (3) can be operated in a first mode, in which the operator operates the joystick to determine the direction into which the vehicle is steered and the return to center means (7) produce a restoring force on the handle (5) in a direction towards a neutral position of the handle (5), **characterized in that** the joystick (3) can be operated in a second mode, in which the vehicle can be steered by a GPS-System, wherein in the second mode the return to center means (7) move the handle (5) in a position corresponding to a steering angle of the steering motor (2).

2. Hydraulic steering system according to claim 1, **characterized in that** the signal at the input (8) indicates a speed of the vehicle.

3. Hydraulic steering system according to claim 1 or 2, **characterized in that** the return to center means (7) comprise a controller (9) and a motor (10) acting on the handle (5) of the joystick (3).

4. Hydraulic steering system according to claim 3, **characterized in that** the motor (10) is an electric motor.

5. Hydraulic steering system according to claim 4, **characterized in that** the motor (10) is a stepper motor.

6. Hydraulic steering system according to any of claims 1 to 5, **characterized in that** the handle angle sensor (6) is a hall sensor.

7. Hydraulic steering system according to any of claims 1 to 6, **characterized in that** the return to center (7) means are free of a spring.

8. Hydraulic steering system according to any of claims 1 to 7, **characterized in that** in the second mode the position of the handle (5) corresponding to the steering angle of the motor (2) is considered as neutral position.

9. Hydraulic steering system according to any of claims 1 to 8, **characterized in that** the handle (5) has a moving range of ± 30°.

10. Hydraulic steering system according to any of claims 1 to 9, **characterized in that** the restoring force is updated at least 500 times per second.

## Patentansprüche

1. Hydraulisches Lenksystem (1), umfassend einen Lenkmotor (2) und einen Joystick (3) mit einem Gehäuse (4), einem beweglich am Gehäuse (4) montierten Griff (5), einem Griffwinkelsensor (6) und einer Rückholeinrichtung (7), die eine Rückstellkraft auf den Griff (5) erzeugt, wobei die Rückholeinrichtung (7) eine variable Rückstellkraft in Abhängigkeit von einem Winkel des Griffs (5) und/oder von einem Signal an einem Eingang (8) der Rückholeinrichtung (7) für einen Parameter eines zu lenkenden Fahrzeugs erzeugt und der Joystick (3) in einem ersten Modus betrieben werden kann, wobei der Bediener den Joystick betätigt, um die Richtung zu bestimmen, in die das Fahrzeug gelenkt wird, und die Rückholeinrichtung (7) eine Rückstellkraft auf den Griff (5) in einer Richtung zu einer Neutralstellung des Griffs (5) erzeugt, **dadurch gekennzeichnet, dass** der Joystick (3) in einem zweiten Modus betrieben werden kann, in dem das Fahrzeug durch ein GPS-System gelenkt werden kann, wobei die Rückholeinrichtung (7) den Griff (5) im zweiten Modus in eine Stellung bewegt, die einem Lenkwinkel des Lenkmotors (2) entspricht.

2. Hydraulisches Lenksystem nach Anspruch 1, **dadurch gekennzeichnet, dass** das Signal am Eingang (8) eine Geschwindigkeit des Fahrzeugs anzeigt.

3. Hydraulisches Lenksystem nach Anspruch 1 oder 2, **dadurch gekennzeichnet, dass** die Rückholeinrichtung (7) eine Steuerung (9) und einen auf den Griff (5) des Joysticks (3) einwirkenden Motor (10) umfasst.

4. Hydraulisches Lenksystem nach Anspruch 3, **dadurch gekennzeichnet, dass** der Motor (10) ein Elektromotor ist.

5. Hydraulisches Lenksystem nach Anspruch 4, **dadurch gekennzeichnet, dass** der Motor (10) ein Schrittmotor ist.

6. Hydraulisches Lenksystem nach einem der Ansprüche 1 bis 5, **dadurch gekennzeichnet, dass** der Griffwinkelsensor (6) ein Hallsensor ist.

7. Hydraulisches Lenksystem nach einem der Ansprüche 1 bis 6, **dadurch gekennzeichnet, dass** die Rückholeinrichtung (7) federfrei ist.

8. Hydraulisches Lenksystem nach einem der Ansprüche 1 bis 7, **dadurch gekennzeichnet, dass** im zweiten Modus die dem Lenkwinkel des Motors (2) entsprechende Stellung des Griffs (5) als Neutralstellung betrachtet wird.

9. Hydraulisches Lenksystem nach einem der Ansprüche 1 bis 8, **dadurch gekennzeichnet, dass** der Griff (5) einen Bewegungsbereich von ±30° aufweist.

10. Hydraulisches Lenksystem nach einem der Ansprüche 1 bis 9, **dadurch gekennzeichnet, dass** die Rückstellkraft mindestens 500 mal pro Sekunde aktualisiert wird.

## Revendications

1. Système de direction hydraulique (1) comprenant un moteur de direction (2) et un manche de commande (3) présentant un boîtier (4), une poignée (5) montée mobile dans le boîtier (4), un capteur d'angle de poignée (6) et un moyen de retour au centre (7) produisant une force de rappel sur la poignée (5), le moyen de retour au centre (7) produisant une force de rappel variable en fonction d'un angle de la poignée (5) et/ou d'un signal au niveau d'une entrée (8) du moyen de retour au centre (7) pour un paramètre du véhicule à diriger et le manche de commande (3) pouvant être actionné dans un premier mode, dans lequel l'opérateur actionne le manche de commande pour déterminer la direction dans laquelle le véhicule est dirigé et le moyen de retour au centre (7) produit une force de rappel sur la poignée (5) dans une direction vers une position neutre de la poignée (5), **caractérisé en ce que** le manche de commande (3) peut être actionné dans un second mode, dans lequel le véhicule peut être dirigé par un système GPS, dans le second mode, le moyen de retour au centre (7) déplaçant la poignée (5) dans une position correspondant à un angle de direction du moteur de direction (2).

2. Système de direction hydraulique selon la revendication 1, **caractérisé en ce que** le signal au niveau de l'entrée (8) indique une vitesse du véhicule.

3. Système de direction hydraulique selon la revendication 1 ou 2, **caractérisé en ce que** le moyen de retour au centre (7) comprend un dispositif de commande (9) et un moteur (10) agissant sur la poignée (5) du manche de commande (3).

4. Système de direction hydraulique selon la revendication 3, **caractérisé en ce que** le moteur (10) est un moteur électrique.

5. Système de direction hydraulique selon la revendication 4, **caractérisé en ce que** le moteur (10) est un moteur pas à pas.

6. Système de direction hydraulique selon l'une quelconque des revendications 1 à 5, **caractérisé en ce que** le capteur d'angle de poignée (6) est un capteur à effet Hall.

7. Système de direction hydraulique selon l'une quelconque des revendications 1 à 6, **caractérisé en ce que** le moyen de retour au centre (7) est exempt de ressort.

8. Système de direction hydraulique selon l'une quelconque des revendications 1 à 7, **caractérisé en ce que** dans le second mode, la position de la poignée (5) correspondant à l'angle de direction du moteur (2) est considérée comme position neutre.

9. Système de direction hydraulique selon l'une quelconque des revendications 1 à 8, **caractérisé en ce que** la poignée (5) présente une plage de déplacement de ± 30°.

10. Système de direction hydraulique selon l'une quelconque des revendications 1 à 9, **caractérisé en ce que** la force de rappel est actualisée au moins 500 fois par seconde.
